# EUROPEAN PATENT APPLICATION

(11) **EP 4 369 466 A1**
(43) Date of publication of application: **15.05.2024**
(21) Application number: 23825593.9
(22) Date of filing: 10.07.2023
(51) Int. Cl.: H01M 10/0587, H01M 4/13, H01M 10/0525

(54) **JELLY ROLL AND BATTERY**

(30) Priority: 15.09.2022 CN 202222450151 U; 09.10.2022 CN 202222650473 U
(71) Applicant: Zhuhai CosMX Battery Co., Ltd., Zhuhai, Guangdong 519180 (CN)
(72) Inventor: ZHANG, Baohai, Zhuhai, Guangdong 519180 (CN); PENG, Chong, Zhuhai, Guangdong 519180 (CN); LI, Junyi, Zhuhai, Guangdong 519180 (CN)
(74) Representative: Bandpay & Greuter
(86) International application number: PCT/CN2023/106640
(87) International publication number: WO 2024/055733

(57) **Abstract**

The present application provides a rolled core and a battery, where the rolled core includes a positive electrode piece having a paste-removal portion of positive electrode piece, and a negative electrode piece including a negative current collector (10), a negative active material layer (20), and a gap filling body (30); the paste-removal portion of positive electrode piece is a missing part of the positive electrode piece relative to the negative electrode piece at a winding-start end of the rolled core; the negative current collector (10) includes a first side and a second side which are opposite to each other, and at least one of the first side and the second side is provided with a negative active material layer (20); the gap filling body (30) is arranged on one of the first side and the second side at a position corresponding to the winding-start end of the rolled core. The present application improves the flatness of the inner ring of the rolled core of the battery, reduces expansion deformation of the battery caused by uneven stress during cyclic expansion process, and reduces capacity degradation and battery failure caused by the edge precipitation of lithium, thereby improving battery usage effect.

## Description

This application claims priority to Chinese Patent Application No. 202222450151.X, entitled "NEGATIVE ELECTRODE PIECE AND BATTERY", and filed with the China National Intellectual Property Administration on September 15, 2022, and Chinese Patent Application No. 202222650473.9, entitled "NEGATIVE ELECTRODE PIECE AND BATTERY", and filed with the China National Intellectual Property Administration on October 09, 2022, which are hereby incorporated by reference in their entireties.

### TECHNICAL FIELD

The present application relates to the technical field of batteries, and in particular, to a rolled core and a battery.

### BACKGROUND

Lithium-ion batteries are widely used in people's daily life. Among them, lithium-ion batteries have the characteristics of high specific energy, low self-discharge, long cycle life and no pollution to the environment, etc. With the rapid development of lithium-ion battery technology, people put forward higher requirements for the energy density, fast charging capability and charge-discharge rate of lithium-ion batteries.

In the prior art, the structure of the conventional winding lithium-ion battery cannot meet the requirements of fast charging, so it is necessary to move the position of the tab to positions such as 3/4, 1/3 or 1/2 of the positive and negative electrode pieces. In order to prevent the edge precipitation of lithium, it is necessary to cut the positive electrode piece to allow the negative electrode piece to cover the positive electrode piece, which causes that there is a gap in the winding core at this position, resulting in uneven inner ring of the winding core, and then poor battery performance.

### SUMMARY

The application provides a rolled core and a battery, so as to solve the problem of poor usage performance of the battery caused by the unevenness of the inner ring of the rolled core in the prior art.

In order to achieve the above purpose, the present application provides a rolled core, including: a positive electrode piece having a paste-removal portion, a negative electrode piece including a negative current collector, a negative active material layer, and a gap filling body, where the paste-removal portion is a missing part of the positive electrode piece relative to the negative electrode piece at a winding-start end of the rolled core; the negative current collector includes a first side and a second side which are opposite to each other, and at least one of the first side and the second side is provided with the negative active material layer; the gap filling body is arranged at a position on one of the first side and the second side corresponding to the winding-start end of the rolled core, and the gap filling body is configured for filling a gap between the positive electrode piece and the negative electrode piece at the winding-start end of the rolled core.

Optionally, a length of the negative active material layer on the first side in a extending direction of the negative current collector is greater than that of the negative active material layer on the second side in the extending direction of the negative current collector, and a length of the negative current collector is greater than that of the negative active material layer on the first side.

Optionally, the gap filling body is arranged on the first side, and at least part of the gap filling body is fixed to the negative active material layer.

Optionally, a first end of the gap filling body is flush with a first end of the negative active material layer on the first side, the first end of the negative active material layer on the first side is an end of the negative active material layer close to the winding-start end of the rolled core, and the first end of the gap filling body is an end of the gap filling body close to a tail of the negative current collector.

Optionally, one part of the gap filling body is fixed to the negative active material layer, and the other part of the gap filling body is fixed to the negative current collector.

Optionally, the gap filling body is arranged on the second side, the length of the negative current collector is greater than a length of the negative active material layer on the second side, and the gap filling body is fixed to the negative current collector.

Optionally, the first end of the negative active material layer on the first side is opposite to a center between the first end and second end of the gap filling body; the first end of the negative active material layer on the first side is an end of the negative active material layer close to the winding-start end of the rolled core; the first end of the gap filling body is an end of the gap filling body close to a tail of the negative current collector; and the second end of the gap filling body is an end of the gap filling body far away from the tail of the negative current collector.

Optionally, the first end of the negative active material layer on the first side is flush with the first end of the gap filling body; or, the first end of the negative active material layer is flush with the second end of the gap filling body; the first end of the negative active material layer on the first side is an end of the negative active material layer close to the winding-start end of the rolled core, the first end of the gap filling body is an end of the gap filling body close to a tail of the negative current collector, and the second end of the gap filling body is an end of the gap filling body far away from the tail of the negative current collector.

Optionally, the gap filling body is an adhesive tape.

Optionally, the adhesive tape has a through-hole structure.

Optionally, the adhesive tape includes an insulating layer and an adhesive layer, the adhesive layer is fixed to the negative electrode piece and the insulating layer is located on a side of the adhesive layer away from the negative electrode piece.

Optionally, a thickness value of the adhesive layer is greater than or equal to 2µm, and the thickness value of the adhesive layer is less than or equal to a first preset value; and/or, a thickness value of the insulating layer is greater than or equal to 2µm, and the thickness value of the insulating layer is less than or equal to a first preset value. The first preset value is greater than or equal to half of a thickness value of the paste-removal portion of the positive electrode piece minus 10µm, and the first preset value is less than or equal to half of the thickness value of the paste-removal portion of the positive electrode piece minus 4µm.

Optionally, a thickness of the adhesive tape is 0.52-0.55 times a thickness of the positive electrode piece.

Optionally, a length of the adhesive tape in an extending direction of the negative electrode piece is 1.8-2.2 times a length of the paste-removal portion of the positive electrode piece.

Optionally, the gap filling body is a paste coating layer, and the paste coating layer is provided with protrusions in the direction perpendicular to the negative active material layer.

Optionally, the paste coating layer and the negative active material layer arranged on the first side are formed as an integral structure; or the negative electrode active material layer and the paste coating layer are combined into a double-layer structure.

Optionally, the paste coating layer includes at least one of artificial graphite, natural graphite, mesophase carbon microsphere, soft carbon, hard carbon and organic polymer compound carbon.

Optionally, a length of the paste coating layer along the extending direction of the negative electrode piece is the same as a length of the paste-removal portion of the positive electrode piece.

Optionally, a height of the protrusion of the paste coating layer is 1.03-1.08 times a thickness of the positive electrode piece.

Optionally, the paste coating layer includes at least one of a pressure-sensitive adhesive, ceramic and polymer layer.

Optionally, the polymer layer includes at least one of polyethylene, polypropylene, polyethylene terephthalate, polyvinyl chloride, polyimide and polyurethane, and/or; the pressure-sensitive adhesive includes at least one of rubber, silica gel, acrylate and polyurethane.

The present application further provides a battery including a rolled core described in the first aspect of the present application.

In the present application, in the related art, in order to prevent the edge precipitation of lithium, the positive electrode piece will be cut, and the cut negative electrode piece will cover the positive electrode piece, thereby leaving a gap in the battery rolled core at this position and then resulting in uneven inner ring of the battery rolled core. The negative electrode piece in the present embodiment of the application includes the gap filling body, which is arranged at an end of one of the first side and the second side close to the winding-start end of the rolled core, and the gap filling body can fill a gap between the positive electrode piece and the negative electrode piece at the winding-start end of the rolled core, thereby reducing the bulge and unevenness caused by bending of the gap filling body, improving the evenness of the battery at the inner ring of the rolled core, reducing expansion deformation of the battery caused by uneven stress during cyclic expansion process, and reducing capacity degradation and battery failure due to the edge precipitation of lithium, and further improving the effectiveness of battery usage.

It should be understood that the content described in this section is not intended to identify key or important features of the embodiments of the present application, nor is it intended to limit the scope of the present application. Other features of the present application will be easily understood through the following description.

### BRIEF DESCRIPTION OF DRAWINGS

In order to illustrate the technical solutions in the embodiments of the present application or in the prior art more clearly, the drawings required in the description of the embodiments or in the prior art will be briefly introduced below. Obviously, the drawings in the following description are only embodiments of the present application. For the person skilled in the art, other drawings may also be obtained based on these drawings without creative work.
FIG. 1 is a structural schematic diagram of a winding battery in the related art.
FIG. 2a is a structural schematic diagram I of a negative electrode piece when a gap filling body is an adhesive tape according to an embodiment of the present application.
FIG. 2b is a structural schematic diagram of the negative electrode piece shown in FIG. 2a in the wound state.
FIG. 3 is a structural schematic diagram II of the negative electrode piece when the gap filling body is the adhesive tape according to an embodiment of the present application.
FIG. 4 is a structural schematic diagram III of the negative electrode piece when the gap filling body is the adhesive tape according to an embodiment of the present application.
FIG. 5a is a structural schematic diagram IV of the negative electrode piece when the gap filling body is the adhesive tape according to an embodiment of the present application.
FIG. 5b is a structural schematic diagram of the negative electrode piece shown in FIG. 5a in the wound state.
FIG. 6 is a structural schematic diagram V of the negative electrode piece when the gap filling body is the adhesive tape according to an embodiment of the present application.
FIG. 7 is a structural schematic diagram VI of the negative electrode piece when the gap filling body is the adhesive tape according to an embodiment of the present application.
FIG. 8 is a structural schematic diagram VII of the negative electrode piece when the gap filling body is the adhesive tape according to an embodiment of the present application.
FIG. 9 is a structural schematic diagram VIII of the negative electrode piece when the gap filling body is a paste coating layer according to an embodiment of the present application.
FIG. 10 is a structural schematic diagram IX of the negative electrode piece when the gap filling body is the paste coating layer according to an embodiment of the present application.
FIG. 11 is a structural schematic diagram X of the negative electrode piece when the gap filling body is the paste coating layer according to an embodiment of the present application.
FIG. 12 is a structural schematic diagram XI of the negative electrode piece when the gap filling body is the paste coating layer according to an embodiment of the present application.
FIG. 13 is a structural schematic diagram XII of the negative electrode piece when the gap filling body is the paste coating layer according to an embodiment of the present application.

Description of reference signs:
10- Negative current collector;
20- Negative active material layer;
30- Gap filling body.

### DESCRIPTION OF EMBODIMENTS

In the following, the technical solutions in the embodiments of the present application will be clearly and completely described in combination with the drawings in the embodiments of the present application. Obviously, the described embodiments are a part of the embodiments of the present application, but not all of them. Based on the embodiments in the present application, all other embodiments obtained by the person skilled in the art without creative work fall within the protection scope of the present application.

The terms "first" and "second" and the like in the embodiments of the present application are used to distinguish similar objects, rather than necessarily describing a specific order or precedence. Furthermore, the terms "including/comprising" and "having" and any variations thereof are intended to cover non-exclusive inclusion. For example, a process, method, system, product or device that includes a series of steps or units is not necessarily limited to those explicitly listed, but may include other steps or units which are not explicitly listed or inherent to such process, method, product or device.

The rolled core in the first aspect of the present application includes a positive electrode piece and a negative electrode piece, which may be wound to form a rolled core. Understandably, there is a separator between the positive electrode piece and the negative electrode piece.

The positive electrode piece has a paste-removal portion which is a missing part of the positive electrode piece relative to the negative electrode piece at an end of the positive electrode piece close to the center of the rolled core, so that there is a gap between the positive electrode piece and the negative electrode piece at the end close to the center of the rolled core for battery. In other words, the paste-removal portion of positive electrode piece is a missing part of the positive electrode piece relative to the negative electrode piece at the winding-start end of the rolled core, and there is a gap between the positive electrode piece and the negative electrode piece at the winding-start end of the rolled core for battery. It can be understood that since the rolled core is wound from inside to outside during winding, the winding-start end here refers to the starting position of the rolled core in the winding process, that is, a horizontal end of a center line of the rolled core in its thickness direction, which is also the end of the positive electrode piece and the negative electrode piece at the innermost side of the rolled core.

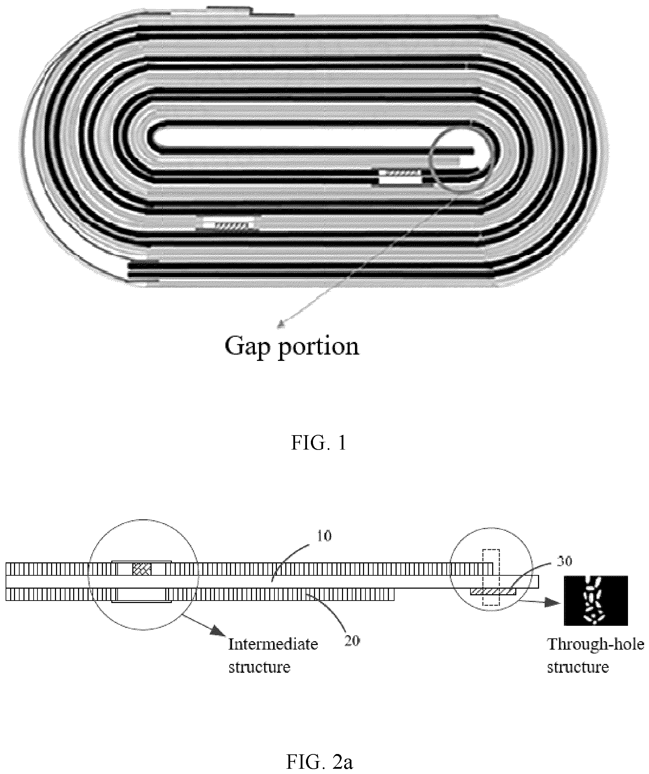

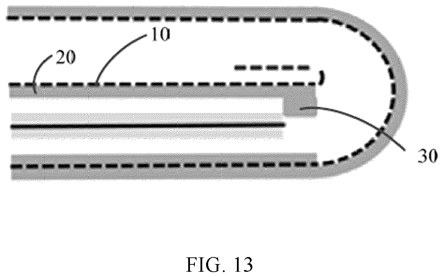

As shown in FIGS 2a to 13, the negative electrode piece includes a negative current collector 10, a negative active material layer 20, and a gap filling body 30. The negative current collector 10 includes a first side and a second side which are opposite to each other, and at least one of the first side and the second side is provided with a negative active material layer 20. The gap filling body 30 is arranged on one of the first side and the second side at an end close to the center of the rolled core for battery, and is configured for filling the gap between the positive electrode piece and the negative electrode piece at their ends close to the center of the rolled core for battery.

In this embodiment, the negative electrode piece includes the negative current collector 10, the negative active material layer 20, and the gap filling body 30 arranged on one of the first side and the second side and close to one end of the center of the rolled core for battery. The gap filling body 30 can fill the gap between the positive electrode piece and the negative electrode piece at the end close to the center of the rolled core for battery, thereby improving the flatness of the inner ring of the rolled core of the battery, reducing expansion deformation of the battery caused by uneven stress during cyclic expansion process. Further, the capacity degradation and battery failure caused by the edge precipitation of lithium is reduced, thereby improving battery usage performance.

Some specific embodiments of the rolled core of the present application are described below.

As shown in FIGS. 2a to 8, in the negative electrode piece provided in Embodiment 1 of the present application, the gap filling body 30 is an adhesive tape 30. The negative current collector 10 includes a first side and a second side which are opposite to each other, and at least one of the first side and the second side is provided with a negative active material layer 20. The adhesive tape 30 has a through-hole structure; and is arranged on one of the first side and the second side at the end close to the center of the rolled core for battery and is configured for filling the gap between the positive electrode piece and the negative electrode piece at their ends close to the center of the rolled core for battery.

In this embodiment, the negative electrode piece includes the negative current collector 10, the negative active material layer 20, and the adhesive tape 30 arranged on one of the first side and the second side and at the end of the rolled core for battery close to its center. The adhesive tape 30 is capable of filling the gap between the positive electrode piece and the negative electrode piece at the end close to the center of the rolled core for battery, thereby improving the flatness of the inner ring of the rolled core of the battery, reducing expansion deformation of the battery caused by uneven stress during cyclic expansion process, reducing capacity degradation and battery failure caused by the edge precipitation of lithium, and improving battery usage effect.

The adhesive tape 30 may also have the above through-hole structure. By the arrangement of the through-hole structure, the transfer of lithium ions in the battery after winding treatment can be improved. Therefore, adhesive tape 30 may reduce its influence on the internal reaction or process of the battery to a certain extent through the arrangement of through-hole structure, and furthermore, if the adhesive tape 30 needs to be bent, the arrangement of through-hole structure may reduce the bulge or unevenness of the adhesive tape 30 caused by bending.

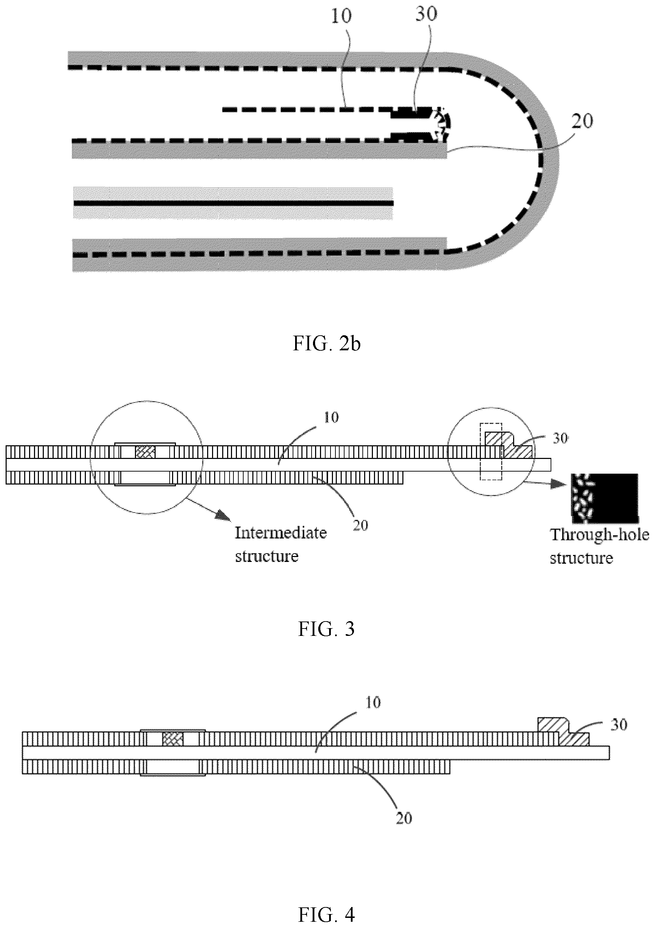

Please refer to FIG. 2a, FIG. 2b and FIG. 3, the position of the through-hole structure in the adhesive tape 30 may be determined according to the position where the adhesive tape 30 is arranged on the negative current collector 10 or the negative active material layer 20. In the case shown in FIG. 2a, the through-hole structure is arranged on the left side of the adhesive tape 30 in the direction shown in FIG. 2a, and in the case shown in FIG. 3, the through-hole structure is arranged near the center of the adhesive tape 30 in the direction shown in FIG. 2a.

It should be noted that the through-hole structure may be added according to the user's requirements, and without the arrangement of the through-hole structure in the adhesive tape 30, the flatness of the inner ring of the rolled core of the battery may still be improved and the expansion deformation of the battery due to uneven stress during cyclic expansion process may be reduced, which will not be described in detail in the embodiments of the present application.

It should be understood that the adhesive tape 30 may be arranged on either the first side or the second side. After the adhesive tape 30 is arranged on both sides of the negative active material layer 20, the gap of the inner ring of the rolled core may be effectively filled through winding treatment, thereby reducing the possibility of lithium precipitation at the battery edge.

In addition, the adhesive tape 30 may be directly fixed to the negative current collector 10. Alternatively, one part of the adhesive tape 30 may be fixed to the negative current collector 10, and the other part of the adhesive tape 30 may be fixed to the negative active material layer 20.

Specifically, when the adhesive tape 30 is provided on one of the two sides where the negative active material layer 20 has a longer length along the extending direction of the negative current collector 10, one part of the adhesive tape 30 may be attached and fixed to the negative current collector 10, and the other part of the adhesive tape 30 may be attached and fixed to the negative active material layer 20. After the negative electrode piece is matched and wound with the positive electrode, the adhesive tape 30 may improve the flatness of the inner ring of the rolled core of the battery.

When the adhesive tape 30 is provided on one of the two sides where the negative active material layer 20 has a shorter length along the extending direction of the negative current collector 10, the adhesive tape 30 may be completely attached and fixed to the negative current collector 10. After the negative electrode piece is matched and wound with the positive electrode, the adhesive tape 30 may still improve the flatness of the inner ring of the rolled core of the battery.

It should be understood that the length and thickness of the adhesive tape 30 may be set according to the structural size of the inner ring of the rolled core of the battery, or according to the size of the paste-removal portion of positive electrode piece in the battery. The paste-removal portion of positive electrode piece is a missing part of a positive electrode piece relative to the negative electrode piece at the end of the positive electrode piece close to the center of the rolled core for battery, which is not limited in the embodiments of the present application.

Optionally, in a case that the negative active material layer 20 is arranged on the first side and the second side, the length of the negative active material layer 20 on the first side along the extending direction of the negative current collector 10 is greater than that of the negative active material layer 20 on the second side along the extending direction of the negative current collector 10;
in a case that the adhesive tape 30 is arranged on one side of the first side and the length of the negative current collector 10 is greater than that of the negative active material layer 20 arranged on the first side, one part of the adhesive tape 30 is fixed to the negative active material layer 20 and the other part of the adhesive tape 30 is fixed to the negative current collector 10;
in a case that the adhesive tape 30 is arranged on the second side and the length of the negative current collector 10 is greater than that of the negative active material layer 20 arranged on the first side, the adhesive tape 30 is fixed to the negative current collector 10.

In this embodiment, under the premise that the length of the negative active material layer 20 on the first side along the extending direction of the negative current collector 10 is greater than that of the negative active material layer 20 on the second side along the extending direction of the negative current collector 10, the arrangement mode and position of the adhesive tape 30 change due to the different lengths of the negative active material layer 20 on both sides. By arranging the adhesive tape 30 on different sides of the negative current collector, the limitations of arranging the position of the adhesive tape 30 are reduced, and the requirements of improving the flatness of the inner ring of the rolled core may be met at the same time, thereby improving the usage performance of the battery.

It should be noted that when the adhesive tape 30 is arranged on the first side, the adhesive tape 30 after winding treatment will be located outside the tail of the negative current collector 10, and when the adhesive tape 30 is arranged on the second side, the adhesive tape 30 after winding treatment will be located inside the tail of the negative current collector 10.

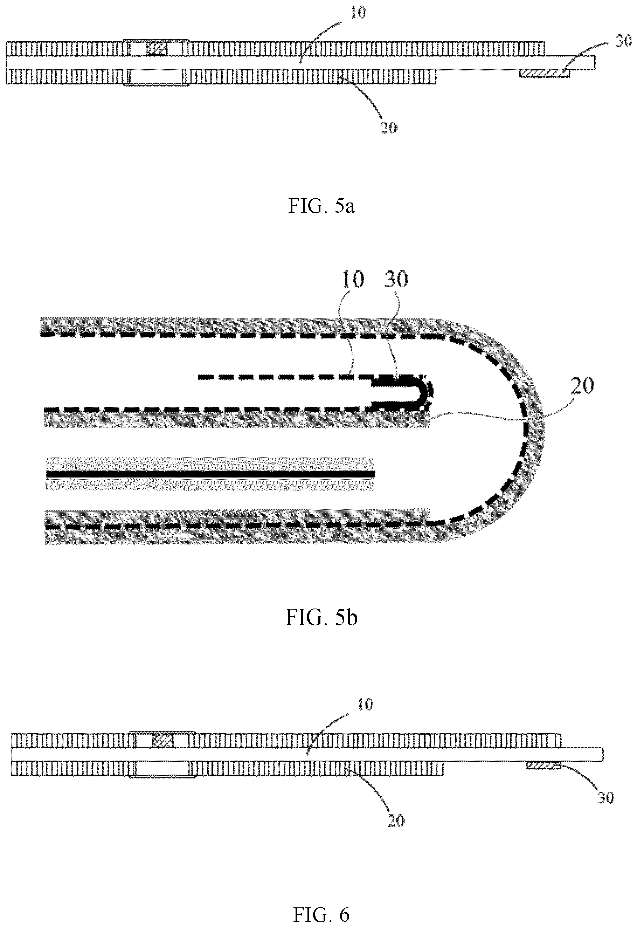

Optionally, referring to FIG. 5, in a case that the adhesive tape 30 is arranged on the second side and the length of the negative current collector 10 is greater than that of the negative active material layer 20 arranged on the first side, the adhesive tape 30 is fixed to the negative current collector 10, where the first end of the negative active material layer 20 is symmetrical to a position of the first side using the negative current collector 10 as a symmetry axis, the position being located in the middle between the first end of the adhesive tape 30 and the second end of the adhesive tape 30.

The first end of the negative active material layer 20 is an end of the negative active material layer 20 on the first side close to the center of the rolled core for battery, the first end of the adhesive tape 30 is an end of the adhesive tape 30 close to the tail of the negative current collector 10, and the second end of the adhesive tape 30 is an end of the adhesive tape 30 close to the negative active material layer 20 (that is, the end of the adhesive tape 30 far away from the tail of the negative current collector 10).

In this embodiment, the adhesive tape 30 is wholly attached and fixed to the negative current collector 10; and the first end of the negative active material layer 20 is symmetrical to a position of the first side using the negative current collector 10 as a symmetry axis, the position being located at the center between the first end of the adhesive tape 30 and the second end of the adhesive tape 30. Through the arrangement of this structure, the adhesive tape 30 will bend with the negative current collector 10 after winding the positive electrode piece and the negative electrode piece, and in this case, and the adhesive tape 30 is located at the inner side of the tail of the negative current collector 10 and is in a double-layer shape, which may effectively average the pressure borne by the electrode piece, and improve the flatness of the surface of the rolled core, thereby reducing the expansion deformation of the rolled core caused by uneven stress during the cyclic expansion process.

Optionally, referring to FIG. 6, in a case that the adhesive tape 30 is arranged on the second side and the length of the negative current collector 10 is greater than that of the negative active material layer 20 arranged on the first side, the adhesive tape 30 is fixed to the negative current collector 10, where the first end of the negative active material layer 20 is flush with the first end of the adhesive tape 30 in the extending direction of the negative current collector 10.

The first end of the negative active material layer 20 is an end of the negative active material layer 20 on the first side close to the center of the rolled core for battery, and the first end of the adhesive tape 30 is an end of the adhesive tape 30 close to the tail of the negative current collector 10.

In this embodiment, the adhesive tape 30 is wholly attached and fixed to the negative current collector 10, and the first end of the negative active material layer 20 is flush with the first end of the adhesive tape 30 in the extending direction of the negative current collector 10. Through such structural arrangement, the adhesive tape 30 will support the bent negative current collector 10 after winding the positive electrode piece and the negative electrode piece. However, the adhesive tape 30 will not bend with the negative current collector 10, the overall shape of the adhesive tape 30 will not deform, and the adhesive tape 30 is in a single-layer shape, which may effectively average the pressure borne by the electrode piece and improve the flatness of the surface of the rolled core, thereby reducing the expansion deformation of the rolled core caused by uneven stress during the cyclic expansion process of the rolled core.

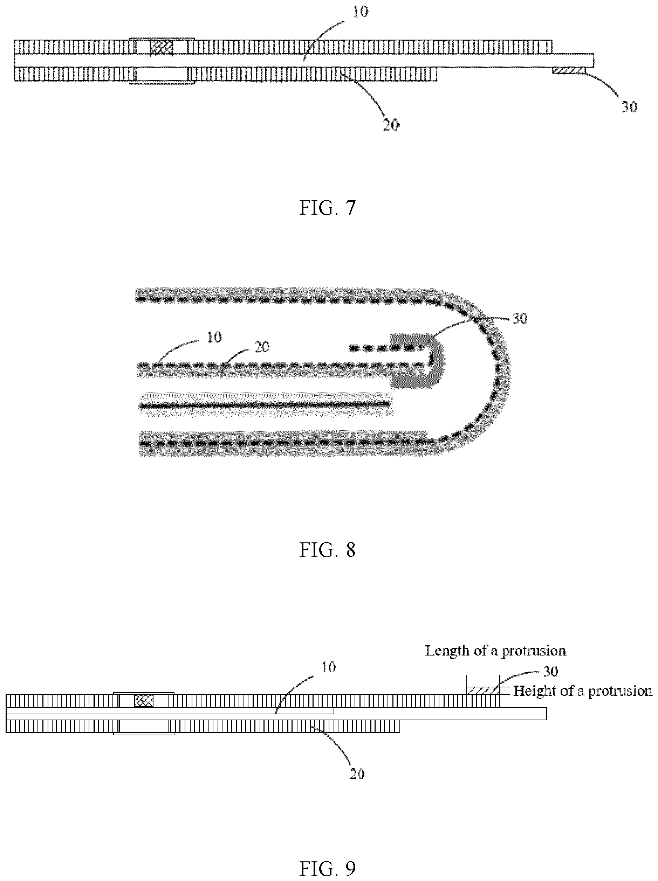

Optionally, referring to FIG. 7, in a case that the adhesive tape 30 is arranged on the second side and the length of the negative current collector 10 is greater than that of the negative active material layer 20 arranged on the first side, the adhesive tape 30 is fixed to the negative current collector 10, where the first end of the negative active material layer 20 is flush with the second end of the adhesive tape 30 in the extending direction of the negative current collector 10.

The first end of the negative active material layer 20 is an end of the negative active material layer 20 on the first side close to the center of the rolled core for battery, and the second end of the adhesive tape 30 is an end of the adhesive tape 30 close to the negative active material layer 20 (that is, the second end of the adhesive tape 30 is an end of the adhesive tape 30 far away from the tail of the negative current collector 10).

In this embodiment, the adhesive tape 30 is wholly attached and fixed to the negative current collector 10, and the first end of the negative active material layer 20 is flush with the second end of the adhesive tape 30 in the extending direction of the negative current collector 10. Through such structural arrangement, after winding the positive electrode piece and the negative electrode piece, the adhesive tape 30 is arranged at the tail of the negative current collector 10 that is subjected to bending treatment, does not deform as a whole and is in a single layer shape, which may effectively average the pressure borne by the electrode piece and improve the flatness of the surface of the rolled core, thereby reducing the expansion deformation of the rolled core caused by uneven stress during the cyclic expansion process of rolled core.

It should be noted that, compared with that in FIG. 6, in the structure shown in FIG. 7, the position of the adhesive tape in the rolled core for battery may be the same as the position of the adhesive tape in the rolled core for battery in FIG. 6, but the fixing surfaces of the adhesive tape in the two cases are different. Take the perspective of FIGS. 6 and 7 as an example, the adhesive tape in FIG. 6 is finally fixed downward to the negative current collector, and the adhesive tape in FIG. 7 is finally fixed upward to the negative current collector.

Optionally, the adhesive tape 30 includes an insulating layer and an adhesive layer.

In this embodiment, the adhesive tape 30 may have a two-layer structure, in which one layer is the insulating layer and the other layer is the adhesive layer. The adhesive layer is fixed to the negative electrode piece, and the insulating layer is located on a side of the adhesive layer which is away from the negative electrode piece. The arrangement of the insulating layer may reduce the influence of the adhesive tape 30 on the internal structure of the battery itself, and the adhesive layer may improve the arrangement stability of the adhesive tape 30 and reduce the possibility of the falling-off of adhesive tape 30. Through the setting of this structure, the adhesive tape 30 can maintain the stability of fixing, and at the same time, it can also reduce the impact on the normal operation of the battery.

It should be noted that the thickness of the insulating layer and the thickness of the adhesive layer may be set according to the thickness of the positive electrode piece in the battery; and the length of the insulating layer and the adhesive layer along the length direction of the electrode piece may be set according to the paste-removal portion of the positive electrode piece, which is not limited by the embodiments of the present application.

In addition, the insulating layer may be selected from insulating materials suitable for the battery, such as polymer layer, where it may be obtained by selecting one kind of insulating material and manufacturing, or it may be obtained by selecting a variety of insulating materials, mixing and manufacturing.

Similarly, the adhesive layer may also be selected from colloidal materials suitable for the battery, such as rubber and silica gel. Appropriate colloidal material may reduce the possibility of the falling-off in the internal environment of the battery. The adhesive layer may be obtained by selecting one kind of colloidal material and manufacturing, or it may be obtained by selecting a variety of colloidal materials, mixing and manufacturing. The material selection of the insulating layer and the adhesive layer is not limited by the embodiments of the present application.

Optionally, a thickness value of the adhesive layer is greater than or equal to 2µm, and is less than or equal to a first preset value.

The first preset value is greater than or equal to half of a thickness value of the paste-removal portion of the positive electrode piece minus 10µm, and is less than or equal to half of the thickness value of the paste-removal portion of the positive electrode piece minus 4µm. The paste-removal portion of positive electrode piece is the missing part of the positive electrode piece relative to the negative electrode piece at an end of the positive electrode piece close to the center of the rolled core for battery.

In this embodiment, in the manufacturing process of the adhesive layer, the thickness of the adhesive layer needs to be set between 2µm and the first preset value. For example, the thickness of the adhesive layer may be between 2µm and half of the thickness value of the paste-removal portion of positive electrode piece minus 10µm. Alternatively, in another feasible embodiment, the thickness of the adhesive layer may be between a value that is half of the thickness value of the paste-removal portion of positive electrode piece minus 10µm and a value that is half of the thickness value of the paste-removal portion of positive electrode piece minus 4µm. Here, it is only an example but not a limitation.

It should be noted that, when the thickness relationship between the adhesive tape 30 and the positive electrode piece is defined, the thickness of the insulating layer may be determined according to the thickness relationship between the adhesive tape 30 and the positive electrode piece and the thickness of the adhesive layer, and there is no need to limit and calculate the thickness of the insulating layer.

Optionally, the thickness value of the insulating layer is greater than or equal to 2µm, and is less than or equal to a first preset value;
the first preset value is greater than or equal to half of the thickness value of the paste-removal portion of positive electrode piece minus 10µm, and is less than or equal to half of the thickness value of the paste-removal portion of positive electrode piece minus 4µm. The paste-removal portion of positive electrode piece is the missing part of the positive electrode piece relative to the negative electrode piece at an end of the positive electrode piece close to the center of the rolled core for battery.

In this embodiment, in the manufacturing process of the insulating layer, the thickness of the insulating layer needs to be set between 2µm and the first preset value. For example, the thickness of the insulating layer may be between 2µm and half of the thickness value of the paste-removal portion of positive electrode piece minus 10µm . Alternatively, in another feasible embodiment, the thickness of the insulating layer may be between a value that is half of the thickness value of the paste-removal portion of positive electrode piece minus 10µm and a value that is the thickness value of the paste-removal portion of positive electrode piece minus 4µm. Here, it is only an example but not a limitation.

It should be noted that when the thickness relationship between the adhesive tape 30 and the positive electrode piece is defined, the thickness of the adhesive layer may be determined according to the thickness relationship between the adhesive tape 30 and the positive electrode piece and the thickness of the insulating layer, and there is no need to limit and calculate the thickness of the adhesive layer.

Optionally, the insulating layer includes at least one of polymer layer, textured paper and glassine paper.

In this embodiment, the insulating layer is made of one or more of polymer layer, textured paper and glassine paper. The polymer layer, the textured paper and the glassine paper may be used in electronic components and have the characteristics of high temperature resistance, good chemical solvent resistance, high adhesion, soft adherence, no residual glue after tearing, etc., which meets the requirements of the negative electrode piece, thereby making the adhesive tape 30 suitable for the internal structure of the battery, improving the flatness of the inner ring of the rolled core and further improving the usage performance of the battery.

Optionally, the polymer layer includes at least one of polyethylene, polypropylene, polyethylene terephthalate, polyvinyl chloride, polyimide and polyurethane.

Optionally, the adhesive layer includes at least one of rubber, silica gel, acrylate and polyurethane.

Optionally, the thickness of the adhesive tape 30 is 0.52-0.55 times the thickness of the positive electrode piece.

In this embodiment, the thickness of the adhesive tape 30 is less than or equal to 0.55 times that of the positive electrode piece, and the thickness of the adhesive tape 30 is more than or equal to 0.52 times that of the positive electrode piece. For example, the thickness of the adhesive tape 30 may be 0.53 times that of the positive electrode piece. Alternatively, in another feasible embodiment, the thickness of the adhesive tape 30 may also be 0.55 times that of the positive electrode piece. Here, it is only an example but not a limitation.

Optionally, the length of the adhesive tape 30 in the extending direction of the negative electrode piece is 1.8-2.2 times that of the paste-removal portion of positive electrode piece, and the paste-removal portion of positive electrode piece is a missing part of the positive electrode piece relative to the negative electrode piece at an end of the positive electrode piece close to the center of the rolled core for battery.

In this embodiment, the length of the adhesive tape 30 along the extending direction of the negative electrode piece is greater than or equal to 1.8 times that of the paste-removal portion of positive electrode piece, and is less than or equal to 2.2 times that of the paste-removal portion of positive electrode piece. For example, the length of the adhesive tape 30 in the extending direction of the negative electrode piece may be 1.9 times that of the paste-removal portion of positive electrode piece. Alternatively, in another feasible embodiment, the length of the adhesive tape 30 along the extending direction of the negative electrode piece may also be 2.1 times that of the paste-removal portion of positive electrode piece. Here, it is only an example but not a limitation.

As shown in FIGS. 9-13, in the negative electrode piece provided in Embodiment 2 of the present application, the gap filling body 30 is a paste coating layer 30; the negative current collector 10 includes a first side and a second side which are opposite to each other, and at least one of the first side and the second side is provided with a negative active material layer 20; the paste coating layer 30 is arranged on one of the first side and the second side and located at an end close to the center of the rolled core for battery. The paste coating layer 30 is provided with a protrusion in a direction perpendicular to the negative active material layer 20, and is configured for filling the gap between the positive electrode piece and the negative electrode piece at the end close to the center of the rolled core for battery.

In this embodiment, the negative electrode piece includes a negative current collector 10, a negative active material layer 20 and a paste coating layer 30. The paste coating layer 30 may be arranged on the first side and fixed to the negative active material layer 20, and is provided with the protrusion in the direction perpendicular to the negative active material layer 20, the protrusion having a certain height. In addition, an end of the paste coating layer 30 close to the center of the rolled core for battery is flush with an end of the negative active material layer 20 close to the center of the rolled core for battery. Of course, the paste coating layer 30 may also be arranged on the second side and fixed to the negative current collector 10, and can fill and level up the gap between the positive electrode piece and the negative electrode piece at their ends close to the center of the rolled core for battery, thereby improving the flatness of the inner ring of the rolled core of the battery, reducing expansion deformation of the battery caused by uneven stress during cyclic expansion process, and at the same time, reducing capacity degradation and battery failure caused by the edge precipitation of lithium, and then improving battery usage performance.

It should be noted that, in a case that the negative active material layer is arranged on the first side and the second side, the length of the negative active material layer on the first side along the extending direction of the negative current collector is greater than the length of the negative active material layer on the second side along the extending direction of the negative current collector.

In addition, the paste coating layer 30 may be fixed to the negative electrode active material layer 20 as a separate structure. The paste coating layer 30 may also be formed as an integral structure with the negative active material layer 20. When the paste coating layer 30 is fixed to the negative active material layer 20 as a separate structure, the paste coating layer 30 may fill and level up the gap between the positive electrode piece and the negative electrode piece at their ends close to the center of the rolled core for battery. When the paste coating layer 30 and the negative active material layer 20 are integrated into one piece, the paste coating layer 30 may also fill and level up the gap between the positive electrode piece and the negative electrode piece at their ends close to the center of the rolled core for battery, which is not limited by the embodiments of the present application.

It should be understood that the length and thickness of the paste coating layer 30 may be set according to the structure size of the battery at the inner ring of the rolled core, or according to the size of the paste-removal portion of positive electrode piece in the battery. The paste-removal portion of positive electrode piece is a missing part of the positive electrode piece relative to the negative electrode piece at an end of the positive electrode piece close to the center of the rolled core for battery, which is not limited by the embodiments of the present application.

In addition, the paste coating layer 30 may be active material or inactive material, and the selection of material may be set according to the actual requirements of the battery or the user requirements. If it is the active material, the material of the paste coating layer 30 may be the same active material as that of the negative active material layer 20, which is not limited by the embodiments of the present application.

It should be noted that if the paste coating layer 30 is made of active material, it may be made of active material different from that of the negative active material layer 20.

Optionally, if the paste coating layer 30 is made of active material, the content of the active material in the paste coating layer 30 may be the same as that of the negative active material layer 20. For example, if the content of active material in the negative active material layer 20 is 97.2%, the content of active material in the paste coating layer 30 may also be set to 97.2%. Of course, the content of the active material in the paste coating layer 30 may also be set to other contents, which is not limited by the embodiments of the present application.

Optionally, in the case that the negative active material layer 20 is arranged on the first side and the second side, the length of the negative active material layer 20 on the first side along the extending direction of the negative current collector 10 is greater than that on the second side along the extending direction of the negative current collector 10;
the paste coating layer 30 is arranged on the first side and fixed to the negative active material layer 20, where the paste coating layer 30 is flush with an end of the negative active material layer 20 close to the center of the battery core.

In this embodiment, the paste coating layer 30 is wholly attached and fixed to the negative active material layer 20 on the first side, and is flush with an end of the negative active material layer 20 close to the center of the rolled core for battery. Through the arrangement of this structure, the paste coating layer 30 may function as filling the part of the paste-removal portion of positive electrode piece, i.e. playing a supporting role, however, the paste coating layer 30 will not bend with the negative current collector 10, and the overall shape of the paste coating layer 30 will not deform, thereby reducing the expansion deformation of the rolled core caused by uneven stress during the cyclic expansion process.

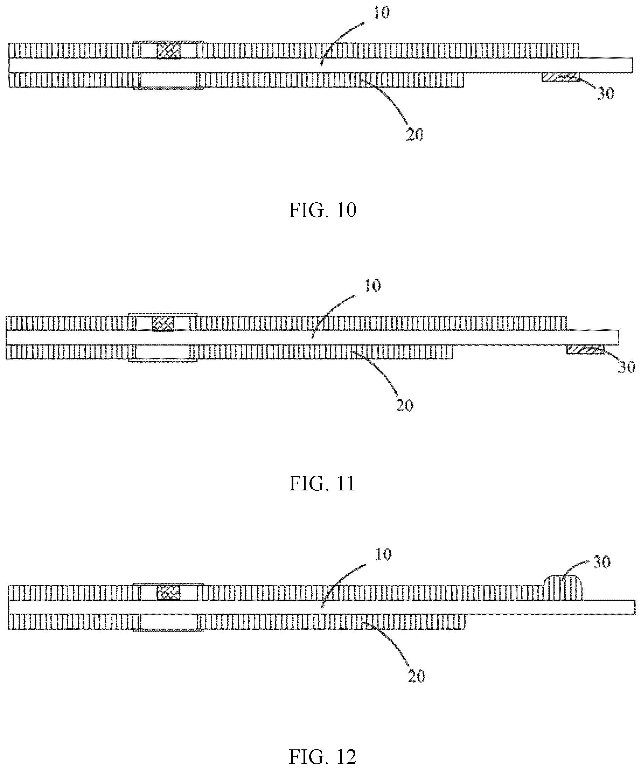

Optionally, referring to FIG. 10, in a case that the negative active material layer 20 is arranged on the first side and the second side, the length of the negative active material layer 20 on the first side along the extending direction of the negative current collector 10 is greater than that on the second side along the extending direction of the negative current collector 10;
the paste coating layer 30 is arranged on the second side and fixed to the negative current collector 10, where the first end of the negative active material layer 20 is flush with the first end of the paste coating layer 30 along the extending direction of the negative current collector 10;
the first end of the negative active material layer 20 is an end of the negative active material layer 20 on the first side close to the center of the rolled core for battery, and the first end of the paste coating layer 30 is an end of the paste coating layer 30 close to the tail of the negative current collector 10.

In this embodiment, the paste coating layer 30 is arranged on the second side and is wholly attached to the negative current collector 10, and the first end of the negative active material layer 20 is flush with the first end of the paste coating layer 30 in the extending direction of the negative current collector 10. Through the arrangement of this structure, the paste coating layer 30 will support the bent negative current collector 10 after winding the positive electrode piece and the negative electrode piece. However, the paste coating layer 30 will not bend with the negative current collector 10, the whole of the paste coating layer 30 will not deform, and the paste coating layer 30 is in a single layer shape, which may effectively average the pressure borne by the electrode piece and improve the flatness of the surface of the rolled core, thereby reducing the expansion deformation of the rolled core caused by uneven stress during the cyclic expansion process.

Optionally, referring to FIG. 11, in a case that the negative active material layer 20 is arranged on the first side and the second side, the length of the negative active material layer 20 on the first side along the extending direction of the negative current collector 10 is greater than that on the second side along the extending direction of the negative current collector 10;
the paste coating layer 30 is arranged on the second side and fixed to the negative current collector 10, where the first end of the negative active material layer 20 is flush with a second end of the paste coating layer 30 in the extending direction of the negative current collector 10;
the first end of the negative active material layer 0 is the end of the negative active material layer 20 on the first side close to the center of the rolled core for battery, and the second end of the paste coating layer 30 is an end of the paste coating layer 30 close to the negative active material layer 20.

In this embodiment, the paste coating layer 30 is arranged on the second side and is wholly attached to the negative current collector 10, and the first end of the negative active material layer 20 is flush with the second end of the paste coating layer 30 in the extending direction of the negative current collector 10. Through the arrangement of this structure, the paste coating layer 30 is arranged at the tail of the bent negative current collector 10 after winding the positive electrode piece and the negative electrode piece, the whole of the paste coating layer 30 will not deform and the coating layer 30 is in a single layer shape, which may effectively average the pressure borne by the electrode piece and improve the flatness of the surface of the rolled core, thereby reducing the expansion deformation of the rolled core caused by uneven stress during the cyclic expansion process.

It should be noted that, comparing the structure shown in FIG. 10 with the structure shown in FIG. 11, the position of the paste coating layer in the rolled core for battery in FIG. 10 may be the same position as that in FIG. 11, but the fixing surfaces of the paste coating layer are different in both cases.

Taking the perspectives of FIGS. 10 and 11 as examples, the paste coating layer in FIG. 10 is finally fixed downward to the negative current collector, and the paste coating layer in FIG. 11 is finally fixed upward to the negative current collector.

Optionally, referring to FIG. 12, the paste coating layer 30 and the negative active material layer 20 that is arranged on the first side are formed as an integral structure; or
the negative active material layer 20 and the paste coating layer 30 are combined into a double-layer structure.

In this embodiment, the paste coating layer 30 and the negative active material layer 20 that is arranged on the first side are formed as an integral structure, which may reduce the process flow, thereby improving the manufacturing efficiency of the negative electrode piece without affecting the normal use of the negative electrode piece. In addition, the negative active material layer 20 and the paste coating layer 30 may also be combined into a double-layer structure. When the paste coating layer 30 is fixed to the negative active material layer 20 in a separate structure, forming a double-layer structure; and the paste coating layer 30 may fill the gap between the positive electrode piece and the negative electrode piece at their ends close to center of the rolled core for battery.

When coating is performed in the battery manufacturing process, the paste coating layer 30 and the negative active material layer 20 may form an integral structure by controlling the spraying speed of the coating die head. It should be noted that, for the negative electrode piece produced by this method, the materials for the paste coating layer 30 and for the negative active material layer 20 may be the same.

Optionally, the paste coating layer 30 includes at least one of artificial graphite, natural graphite, mesophase carbon microsphere, soft carbon, hard carbon and organic polymer compound carbon.

Optionally, the length of the paste coating layer 30 along the extending direction of the negative electrode piece is the same as the length of the paste-removal portion of positive electrode piece, and the paste-removal portion of positive electrode piece is a missing part of the positive electrode piece relative to the negative electrode piece at an end of the positive electrode piece close to the center of the rolled core.

In this embodiment, the length of the paste coating layer 30 along the extending direction of the negative electrode piece is set to be consistent with the length of the paste-removal portion of positive electrode piece. Through the arrangement of this structure, the paste coating layer 30 may fill the gap without affecting the internal structure of the battery and may reduce the influence on the normal operation of the battery.

Optionally, the height of the protrusion of the paste coating layer is 1.03-1.08 times the thickness of the positive electrode piece.

In this embodiment, the thickness of the paste coating layer 30 is less than or equal to 1.08 times that of the positive electrode piece, and the thickness of the paste coating layer 30 is greater than or equal to 1.03 times that of the positive electrode piece. For example, the thickness of the paste coating layer 30 may be 1.04 times that of the positive electrode piece. Variably, in another feasible embodiment, the thickness of the paste coating layer 30 may be 1.07 times that of the positive electrode piece. Here, it is only an example but not a limitation.

Optionally, the paste coating layer 30 includes at least one of pressure-sensitive adhesive, ceramic and polymer layer.

In this embodiment, the paste coating layer 30 is made of inactive material, including one or more of pressure-sensitive adhesive, ceramic and polymer layer, which reduces the impact on the internal structure and environment of the battery and does not affect the normal operation of the battery, thereby filling the gap between the positive electrode piece and the negative electrode piece and effectively improving the usage effect of the battery at the same time.

Optionally, the polymer layer includes at least one of polyethylene, polypropylene, polyethylene terephthalate, polyvinyl chloride, polyimide and polyurethane, and/or;
the pressure-sensitive adhesive includes at least one of rubber, silica gel, acrylate and polyurethane.

In addition, the embodiment of the application also provides a battery including the rolled core.

It should be noted that the above battery may be applied to various electrical devices such as notebook computers, smart phones, new energy vehicles and other devices. The implementation mode of the embodiments of above battery is also suitable for the embodiments of the electronic devices, and can achieve the same technical effects, which is not repeated here.

It should be noted that, in this paper, the terms "include", "including" or any other variation thereof are intended to cover non-exclusive inclusion, so that a process, method, article or device including a series of elements includes not only those elements, but also other elements not explicitly listed, or elements inherent to such process, method, article or device. Without more restrictions, an element defined by the phrase "including one" does not exclude the existence of other identical elements in the process, method, article or device including the element. In addition, it should be pointed out that the scope of the method and device in the embodiments of the present application is not limited to carrying out functions in the discussed order, and may also include carrying out functions in a substantially simultaneous manner or in the reverse order according to the functions involved. For example, the described method may be performed in an order different from the one described, and various steps may be added, omitted, or combined. In addition, features described with reference to some examples may be combined in other examples.

The embodiments of the present application have been described above with reference to the drawings, but the present application is not limited to the above-mentioned specific embodiments, which are only schematic, not restrictive. Under the inspiration of the present application, person skilled in the art may make many forms without departing from the purpose and the scope protected by the claims of the present application, which are all within the protection of the present application.

## Claims

1. A rolled core, comprising:
a positive electrode piece having a paste-removal portion;
a negative electrode piece comprising a negative current collector (10), a negative active material layer (20) and a gap filling body (30);
wherein the paste-removal portion is a missing part of the positive electrode piece relative to the negative electrode piece at a winding-start end of the rolled core;
the negative current collector (10) comprises a first side and a second side that are opposite to each other, and at least one of the first side and the second side is provided with a negative active material layer (20);
the gap filling body (30) is arranged on one of the first side and the second side at a position corresponding to the winding-start end of the rolled core, and is configured for filling a gap between the positive electrode piece and the negative electrode piece at the winding-start end of the rolled core.

2. The rolled core according to claim 1, wherein a length of the negative active material layer (20) on the first side in an extending direction of the negative current collector (10) is greater than that of the negative active material layer (20) on the second side in the extending direction of the negative current collector (10); and a length of the negative current collector (10) is greater than that of the negative active material layer (20) on the first side.

3. The rolled core according to claim 2, wherein the gap filling body (30) is arranged on the first side and at least part of the gap filling body (30) is fixed to the negative active material layer (20).

4. The rolled core according to claim 3, wherein a first end of the gap filling body (30) is flush with a first end of the negative active material layer (30) on the first side,
the first end of the negative active material layer (20) on the first side is an end of the negative active material layer (20) close to the winding-start end of the rolled core, and the first end of the gap filling body (30) is an end of the gap filling body (30) close to a tail of the negative current collector (10).

5. The rolled core according to claim 3, wherein one part of the gap filling body (30) is fixed to the negative active material layer (20) and the other part of the gap filling body is fixed to the negative current collector (10).

6. The rolled core according to claim 2, wherein the gap filling body (30) is arranged on the second side, the length of the negative current collector (10) is greater than a length of the negative active material layer (20) on the second side, and the gap filling body (30) is fixed to the negative current collector (10).

7. The rolled core according to claim 6, wherein the first end of the negative active material layer (20) on the first side is opposite to a center between the first end and second end of the gap filling body (30);
the first end of the negative active material layer (20) on the first side is an end of the negative active material layer (20) close to the winding-start end of the rolled core, the first end of the gap filling body (30) is an end of the gap filling body (30) close to a tail of the negative current collector (10), and the second end of the gap filling body (30) is an end of the gap filling body (30) far away from the tail of the negative current collector (10).

8. The rolled core according to claim 6, wherein a first end of the negative active material layer (20) on the first side is flush with a first end of the gap filling body (30), or a first end of the negative active material layer (20) is flush with a second end of the gap filling body (30);
the first end of the negative active material layer (20) on the first side is an end of the negative active material layer (20) close to the winding-start end of the rolled core, the first end of the gap filling body (30) is an end of the gap filling body (30) close to a tail of the negative current collector (10), and the second end of the gap filling body (30) is an end of the gap filling body (30) far away from the tail of the negative current collector (10).

9. The rolled core according to any one of claims 1-3 and 5-8, wherein the gap filling body (30) is an adhesive tape (30).

10. The rolled core according to claim 9, wherein the adhesive tape (30) has a through-hole structure.

11. The rolled core according to claim 9, wherein the adhesive tape (30) comprises an insulating layer and an adhesive layer, the adhesive layer is fixed to the negative electrode piece and the insulating layer is located on a side of the adhesive layer away from the negative electrode piece.

12. The rolled core according to claim 11, wherein a thickness value of the adhesive layer is greater than or equal to 2µm and is less than or equal to a first preset value; and/or, a thickness value of the insulating layer is greater than or equal to 2µm and is less than or equal to a first preset value;
the first preset value is greater than or equal to half of a thickness value of the paste-removal portion of the positive electrode piece minus 10µm, and is less than or equal to half of the thickness value of the paste-removal portion of the positive electrode piece minus 4µm.

13. The rolled core according to claim 9, wherein a thickness of the adhesive tape (30) is 0.52-0.55 times a thickness of the positive electrode piece.

14. The rolled core according to claim 9, wherein a length of the adhesive tape (30) in an extending direction of the negative electrode piece is 1.8-2.2 times a length of the paste-removal portion of the positive electrode piece.

15. The rolled core according to any one of claims 1-4, 6 and 8, wherein the gap filling body (30) is a paste coating layer (30) provided with a protrusion in a direction perpendicular to the negative active material layer (20).

16. The rolled core according to claim 15, wherein the paste coating layer (30) and the negative active material layer (20) arranged on the first side are formed as an integral structure; or
the negative electrode active material layer (20) and the paste coating layer (30) are combined into a double-layer structure.

17. The rolled core according to claim 15, wherein the paste coating layer (30) comprises at least one of artificial graphite, natural graphite, mesophase carbon microsphere, soft carbon, hard carbon and organic polymer compound carbon.

18. The rolled core according to claim 15, wherein a length of the paste coating layer (30) along an extending direction of the negative electrode piece is the same as a length of the paste-removal portion of the positive electrode piece.

19. The rolled core according to claim 15, wherein a height of the protrusion of the paste coating layer (30) is 1.03-1.08 times a thickness of the positive electrode piece.

20. The rolled core according to claim 15, wherein the paste coating layer (30) comprises at least one of pressure-sensitive adhesive, ceramic and polymer layer.

21. The rolled core according to claim 20, wherein the polymer layer comprises at least one of polyethylene, polypropylene, polyethylene terephthalate, polyvinyl chloride, polyimide and polyurethane, and/or
the pressure-sensitive adhesive comprises at least one of rubber, silica gel, acrylate and polyurethane.

22. A battery, comprising the rolled core according to any one of claims 1-21.
